# EUROPÄISCHE PATENTSCHRIFT

(11) **EP 1 285 832 B1**
(45) Veröffentlichungstag und Bekanntmachung des Hinweises auf die Patenterteilung: **17.11.2004**
(21) Anmeldenummer: 02014209.7
(22) Anmeldetag: 26.06.2002
(51) Int. Cl.: B60T 7/06, B60R 21/09

(54) **Haltevorrichtung für ein Pedal eines Kraftfahrzeugs**
Mounting bracket for a pedal of a vehicle
Support de montage pour pédale d'un véhicule

(30) Priorität: 11.08.2001 DE 10139592
(43) Veröffentlichungstag der Anmeldung: 26.02.2003
(73) Patentinhaber: Dr.Ing. h.c.F. Porsche Aktiengesellschaft, 70435 Stuttgart (DE)
(72) Erfinder: Grundke, Edgar, 71254 Ditzingen (DE)

(56) Entgegenhaltungen:
- EP-A- 1 065 114
- WO-A-02/22412
- US-A- 5 996 439
- US-A- 5 996 440

## Beschreibung

Die Erfindung bezieht sich auf eine Haltevorrichtung für ein Pedal eines Kraftfahrzeugs nach dem Oberbegriff des Anspruchs 1.

Aus der DE 195 01 859 A1 ist eine Pedalanordnung für ein Kraftfahrzeug bekannt, welche über einen Lagerbock mit einem Trägerelement des Fahrzeugaufbaus verbunden und in diesem schwenkbar gehalten ist. Desweiteren ist aus der EP 0 873 923 A1 ein mit dem Fahrzeugaufbau verbundenes Lagerelement bekannt, in dem ein Bremspedal schwenkbar gelagert ist. Aus der gattungsbildenden EP-A1-1 065 114 ist eine Bremspedalvorrichtung eines Kraftfahrzeugs bekannt, welche über eine ortsfeste Konsole mit einem Querträger des Fahrzeugaufbaus verbindbar ist, wobei eine Pedalaufnahme der Vorrichtung zweiteilig ausgebildet ist und ein an der Konsole angeordnetes Lagerelement umfasst, in dem das Pedal schwenkbar gelagert wird. In einer Crashstellung ist das Pedal relativ verlagerbar entgegen der Fahrtrichtung zur feststehenden Konsole angeordnet. Desweiteren ist aus der WO 02/22412 A ein Bremspedal für ein Kraftfahrzeug bekannt, das in einer Crashstellung über eine Verstelleinrichtung verschwenkbar und andererseits über eine Festsetzeinrichtung lösbar gehalten wird. Ferner ist aus der US-A 5,996,440 eine Verstelleinrichtung für ein Fahrzeugpedal bekannt, wobei diese Einrichtung einen in einem Führungsschlitz des Elements geführten Verschiebebolzen umfasst, der eine überlagerte Längs- und Schwenkbewegung des Lagerelements entgegen der Fahrtrichtung zulassend, in der Konsole gehalten wird.

Aufgabe der Erfindung ist es, eine Haltevorrichtung für ein Pedal eines Kraftfahrzeugs zu schaffen, die bei einem Crashfall eine Pedalbewegung in den Fahrzeuginnenraum weitestgehend vermeidet.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile bestehen darin, daß bei einem Crash des Fahrzeugs verhindert werden soll, daß das Pedal in das Fahrzeuginnere bzw. in den Fahrzeuginnenraum hineinwandert. Hierzu ist vorgesehen, daß die Pedalaufnahme der Vorrichtung zweiteilig ausgebildet ist und ein in der Konsole angeordnetes Lagerelement aufweist, in dem das Pedal schwenkbar gelagert wird, wobei das Lagerelement mittels einer gemeinsamen Verstell- und Festsetzeinrichtung in einer Grundstellung festgehalten wird, wobei in einer Crashstellung das Lagerelement relativ verlagerbar entgegen der Fahrtrichtung zur feststehenden Konsole angeordnet wird und das Pedal so mitgenommen wird, daß es sich in Fahrtrichtung aus dem Fahrzeuginnenraum heraus bewegen kann.

Durch diese zweischalige sich entkoppelnde Pedalaufnahme im Crashfall mit Verstell- und Festsetzeinrichtung wird einerseits in der Grundstellung ein fester Sitz in der Konsole und andererseits wird in der Crashstellung eine Verlagerbarkeit des Lagerelements ohne wesentliche Wanderungsbewegung des Pedals in den Fahrzeuginnenraum gewährleistet.

Die Konsole ist vorzugsweise U-profilförmig ausgeführt, in welcher ein U-profilförmiges Lagerelement eingebettet gehalten wird, wobei das Lagerelement einerseits in der Crashstellung über die Verstelleinrichtung verschwenkbar und andererseits über die Festsetzeinrichtung lösbar zur Konsole gehalten wird. Durch diese Ausbildung und Anordnung der Konsole und des Lagerelements wird eine stabile Pedallagerung erzielt, die nach einem Crashfall zusammengehalten ist, trotz der Verlagerung des Lagerelements.

Die Verstelleinrichtung umfaßt im wesentlichen einen in einem Führungsschlitz des Lagerelements geführten Verschiebebolzen, der eine überlagerte Längs- und Schwenkbewegung des Lagerelements entgegen der Fahrtrichtung zulassend in der Konsole gehalten wird. Hierdurch wird in vorteilhafter Weise das Lagerelement auf dem Bolzen verschoben, so daß über das Lagerelement das Pedal aus dem Fahrzeuginnenraum in Fahrtrichtung zurückbewegt wird und somit die Gefahr von Verletzungen des Fahrzeuginsassen vermeidbar ist.

Damit das Lagerelement sich bei einem Crash von der Konsole loslösen kann, weist dieses ein oder mehrere Hakenteile auf, die an einem rückseitigen Stegteil des Lagerelements vorgesehen sind, die in einer Grundstellung ein gegenüberstehendes Stegteil bzw. eine Stegwand der Konsole verriegelnd übergreifen und das Hakenteil in Crashstellung entriegelbar ist. Die Entriegelung der Hakenteile von der Stegwandung der Konsole kann durch ein Abreißen der Hakenteile beim Crashfall erfolgen, so daß das Lagerelement von der Konsole freikommt. Die Art der Verlagerbarkeit bzw. die Bewegung des Lagerelements zur Konsole ist von der Länge des Führungsschlitzes abhängig. Dieser Führungsschlitz im Lagerelement kann gerade, bogenförmig oder in anderer Weise entsprechend der gewünschten Verlagerbarkeit ausgebildet sein, derart, daß das Lagerelement sich entsprechend im Crashfall entgegen der Fahrtrichtung und unter Mitnahme des gelagerten Pedals in Fahrtrichtung und somit aus dem Fahrzeuginnenraum wegbewegen kann.

Insbesondere ist die Verstelleinrichtung in einem - in Bezug auf die Fahrtrichtung - vorderen, unteren Bereich der Konsole und des Lagerelements, wobei der Verschiebebolzen vorzugsweise in einem Abstand zur Schwenkachse des Pedals liegt und etwa in einer horizontalen Ebene mit dieser Schwenkachse angeordnet ist. Die Konsole ist auf mindestens einem dem Bolzen abgekehrten - in Bezug auf die Fahrtrichtung - vorderen Stegbereich in Grundstellung zwischen den Hakenteilen und einer Ausprägung des Lagerelements eingeklemmt gehalten. Durch diese örtliche Anordnung der Verstelleinrichtung im wesentlichen bestehend aus einem Führungsschlitz und einem Bolzen, kann das Lagerelement entgegen der Fahrtrichtung sich verschwenken bzw. in Grenzen des Fahrzeugschlitzes sich verlagern. Hierbei wird in vorteilhafter Weise das im Lagerelement schwenkbar gehaltene Pedal in Fahrtrichtung bewegt.

Das Pedal ist vorzugsweise für eine Fußfeststellbremse in einem Rechtslenkerfahrzeug vorgesehen, wobei eine Montage von vorne erfolgt, da seitlich der Pedalaufnahme Aggregate vorgesehen sind.

Ein Ausführungsbeispiel der Erfindung ist in den Zeichnungen dargestellt und wird im folgenden näher beschrieben.
Es zeigen:
- Fig. 1: eine Seitenansicht einer Haltevorrichtung mit Pedallagerung im Lagerelement in einer Grundstellung,
- Fig. 2: eine schaubildliche Darstellung der Haltevorrichtung gem. Fig. 1,
- Fig. 3: eine Seitenansicht der Haltevorrichtung gem. Fig. 1 in einer Crashstellung und

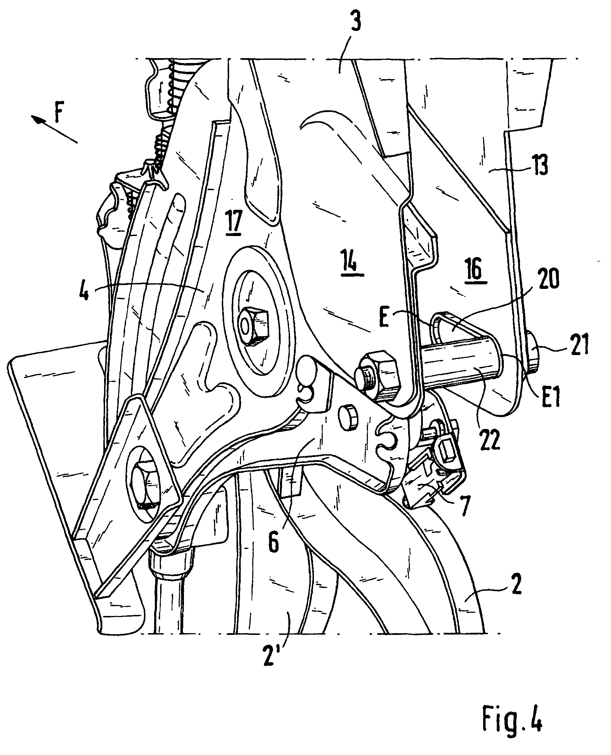

- Fig. 4: eine vergrößerte schaubildliche Darstellung einer Festsetzeinrichtung zwischen Lagerelement und Konsole.

Die Haltevorrichtung 1 eines Pedals 2 in Ruhestellung I und eines Pedals 2' in Betätigungsstellung umfaßt im wesentlichen eine zweiteilige Pedalaufnahme, bestehend aus einer außenliegenden Konsole 3 und einem inneren Lagerelement 4. Das Pedal 2 ist im Lagerelement 4 verstellbar auf einer Achse 5 gehalten, wobei mit diesem Lagerelement 4 ein inneres Lagerteil 6 verbunden ist, das eine vordere Lagebegrenzung 7 für das Pedal 2 aufweist.

Die Konsole 3 ist feststehend und mit einem Rohrträger 8 beispielsweise einem Cockpitquerträger fest verbunden. Innerhalb der Konsole 3 ist einerseits über eine Verstelleinrichtung 10 das Lagerelement 4 von der Grundstellung I in eine Crashstellung II verlagerbar zur Konsole 3 angeordnet und andererseits ist die Lagerkonsole 4 über die Festsetzeinrichtung 11 lösbar an der Konsole 3 befestigt. Die Konsole 3 ist vorzugsweise U-profilförmig mit Seitenwangen 13, 14 und einem rückseitigen - in Fahrtrichtung F gesehen - Steg bzw. einer Stegwand 15 versehen. An der vorderen, dem Steg 15 abgekehrten Seite der Konsole 3 ist die Festsetzeinrichtung 10 vorgesehen. In der U-profilförmigen Konsole 3 ist das ebenfalls U-profilförmige Lagerelement 4 anliegend mit seinen Schenkeln 16, 17 an den Wangen 13, 14 angeordnet. Die Schenkel 16, 17 weisen am oberen freien Ende 18 als Festsetzeinrichtung 11 ein oder mehrere Hakenelemente 19, 19a auf, die den Steg bzw. die Stegwand 15 der Konsole 14 rastend übergreifen. Die Festsetzeinrichtung 10 ist in etwa diagonal gegenüberliegend der Hakenelemente 19, 19a der Einrichtung 11 vorgesehen, die aus einem in Führungsschlitzen 20 des Lagerelements 4 zwangsgeführten Verschiebebolzen 21 besteht, der in den Wangen 13, 14 gehalten wird und von einer Hülse 22 umgeben ist.

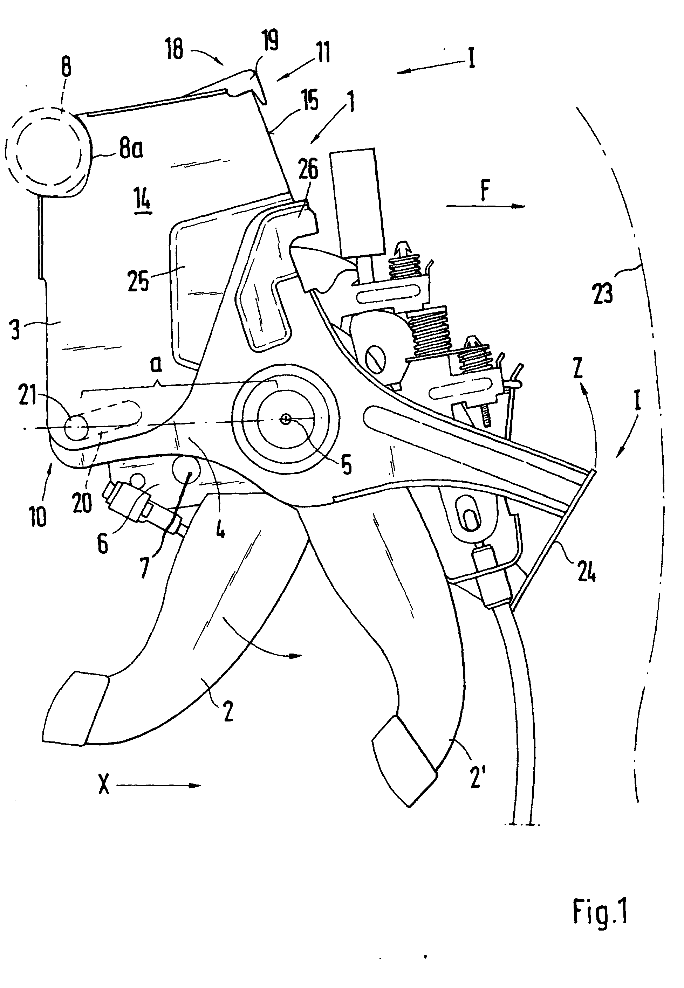

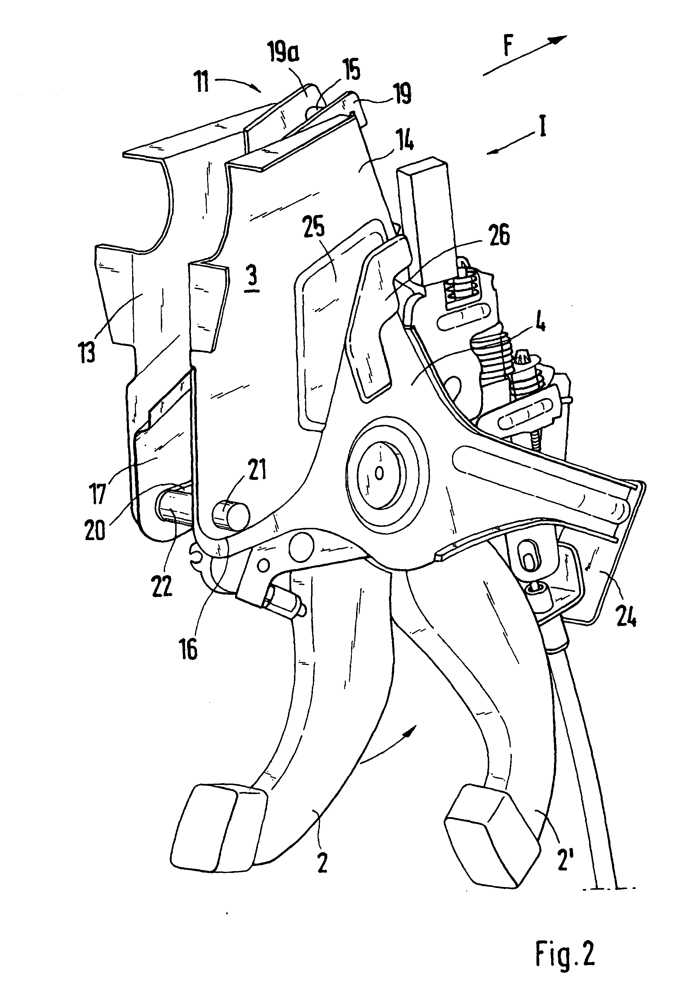

In der Grundstellung I, wie die Fig. 1 und 2 näher zeigen, übergreifen die Hakenelemente 19, 19a der Einrichtung 11 den Steg 15 der Konsole 3. Der Verschiebebolzen 21 bzw. die Hülse 22 steht stirnseitig bei E1 des Führungsschlitzes 20 an.

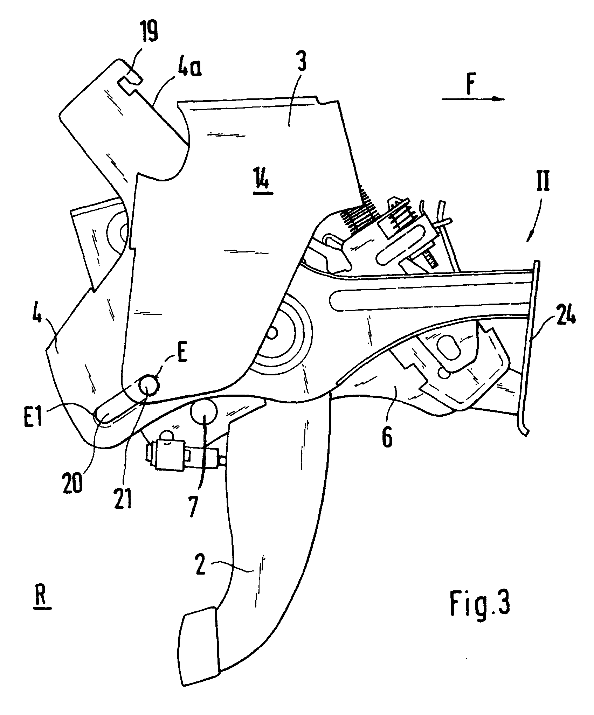

Bei einem Crashfall II erfolgt ein Stoß auf eine Stirnwand 23 oder einem anderen Aufbauteil des Fahrzeugs, so daß eine Belastung der Anschlagplatte 24 erfolgt, die mit dem Lagerelement 4 fest verbunden ist. Hierdurch erfolgt ein Hochschwenken des Lagerelements 4 in Pfeilrichtung Z von der Grundstellung I gem. Fig. 1 in die Crashstellung II gem. Fig. 3 in der Konsole 4. In dieser Stellung rasten die Hakenelemente 19, 19a aus der Stegwand 15 aus, beispielsweise reißen die Hakenelemente 19, 19a ab. Danach verlagert sich das Lagerelement 4 in Pfeilrichtung Z, wobei eine Verlagerung des Lagerelements 4 entgegen der Fahrtrichtung F erfolgt. Hierbei wird das Lagerelement 4 auf der Hülse 22 des feststehenden Bolzens 21 der Konsole 3 geführt, bis dieser am hinteren Ende E des Führungsschlitzes 20 anliegt, wie Fig. 3 näher zeigt. Durch die Verlagerung des Lagerelements 4, welche durch eine der Schwenkbewegung überlagerte Verschiebebewegung erfolgt, wird das Pedal 2 nicht in Richtung des Fahrzeuginnenraums R verschoben, sondern tendenziell in Fahrtrichtung F, also aus dem Fahrzeuginnenraum heraus in Richtung X. Das Pedal ist über ein am Lagerteil 6 angeordnetes Lagerbegrenzungselement 7 in Position gehalten, wobei das Lagerteil 6 mit dem Lagerelement 4 verbunden ist.

In der dargestellten Ausführung ist die Verstelleinrichtung 10 - in Bezug auf die Fahrtrichtung F - in einem vorderen, unteren Bereich der Konsole 3 und des Lagerelements 4 zwischen den Wangen 13, 14 und den Schenkeln 16, 17 vorgesehen, wobei der Verschiebebolzen 21 mit Hülse 22 in einem Abstand a zur Achse 5 des Pedals 2 und in einer etwa horizontalen Ebene X-X liegt, die durch den Bolzen 21 und durch die Achse 5 verläuft.

Der Führungsschlitz 20 ist entsprechend der Verlagerbarkeit des Lagerelements 4 zur Konsole 3 angeordnet, wobei der Schlitz bogenförmig gerade oder einen sonstigen Verlauf aufweisen kann. Dieser Verlauf ist so gewählt, daß in jedem Fall bei einem Verschwenken des Lagerelements 4 sich das Pedal 2 in Fahrtrichtung F und aus dem Fahrzeuginnenraum R heraus bewegen kann.

Wie in Fig. 2 zu erkennen ist, stützt sich das Lagerelement 4 an einer Ausprägung 25 der Konsole 3 mit einer Ausprägung 26 des Lagerelements 4 ab, so daß in der Grundstellung I ein fester Sitz der Pedalaufnahme bzw. des Lagerelements 4 zwischen den Hakenelementen 19, 19a und der Ausprägung 25 gewährleistet ist.

## Patentansprüche

1. Haltevorrichtung für ein Pedal (2) eines Kraftfahrzeugs, insbesondere für ein Pedal (2) einer Fußfeststellbremse, welche über eine ortsfeste Konsole (3) der Haltevorrichtung mit einem Querträger des Fahrzeugaufbaus verbindbar ist, wobei eine Pedalaufnahme der Haltevorrichtung zweiteilig ausgebildet ist und ein in der Konsole (3) angeordnetes Lagerelement (4) umfaßt, in dem das Pedal (2) schwenkbar gelagert ist, **dadurch gekennzeichnet, dass** das Lagerelement (4) mittels einer Verstelleinrichtung (10), die einen in einem Führungsschlitz (20) des Lagerelements (4) geführten Verschiebebolzen (21) umfasst, gehalten ist, sowie über eine Festsetzeinrichtung (11), welche aus mindestens einem ein Stegteil (15) der Konsole (3) übergreifendes Hakenteil (19, 19a) an einem rückseitigen Stegteil (4a) des Lagerelements besteht, in einer Grundstellung (I) festgehalten und in einer Crashstellung (II) relativ verlagerbar entgegen der Fahrtrichtung (F) zur feststehenden Konsole (3) angeordnet ist, derart, dass in der Grundstellung das Stegteil (4a) ein gegenüberstehendes Stegteil (15) der Konsole (3) verriegelnd übergreift und das Hakenteil (19, 19a) in Crashstellung (II) entriegelbar ist.

2. Haltevorrichtung nach Anspruch 1, **dadurch gekennzeichnet, daß** das Lagerelement (4) am - in Fahrtrichtung (F) gesehenen - vorderen stirnseitigen Ende mit einer Anschlagplatte (24) verbunden ist, die einer Stirnwand (23) des Fahrzeugaufbaus beabstandet gegenübersteht.

3. Haltevorrichtung nach einem oder mehreren der vorhergehenden Ansprüche, **dadurch gekennzeichnet, daß** die Verstelleinrichtung (10) eine auf dem Verschiebebolzen (21) zwischen Schenkeln (16, 17) des Lagerelements (4) angeordnete Abstandshülse (22) aufweist.

4. Haltevorrichtung nach einem oder mehreren der vorhergehenden Ansprüche, **dadurch gekennzeichnet, daß** die Konsole (3) in den Wangen (13, 14) Ausnehmungen (8a) aufweist, in denen ein Cockpitquerträger (8) des Fahrzeugs angeordnet und befestigt ist.

5. Haltevorrichtung nach einem oder mehreren der vorhergehenden Ansprüche, **dadurch gekennzeichnet, daß** das Lagerelement (4) in Crashstellung (II) auf dem Bolzen (21) verschiebbar in der Konsole (3) abhängig von der Länge des Führungsschlitzes (20) im Lagerelement (4) angeordnet ist.

6. Haltevorrichtung nach einem oder mehreren der vorhergehenden Ansprüche, **dadurch gekennzeichnet, daß** die Verstelleinrichtung (10) in einem - in Bezug auf die Fahrtrichtung (F) -, unteren Bereich der Konsole (3) und des Lagerelements (4) angeordnet ist und der Verschiebebolzen (21) in einem Abstand (a) zur Schwenkachse (5) des Pedals (2) liegt und etwa in einer horizontalen Ebene mit dieser Schwenkachse (5) angeordnet ist und der offene Führungsschlitz (20) sich in der Grundstellung (I) vom Bolzen (21) nach vorne - in Bezug auf die Fahrtrichtung (F) - erstreckt.

7. Haltevorrichtung nach einem oder mehreren der vorhergehenden Ansprüche, **dadurch gekennzeichnet, daß** die Konsole (3) auf mindestens einem dem Bolzen (21) abgekehrten - in Bezug auf die Fahrtrichtung (F) - vorderen Stegbereich in Grundstellung (I) zwischen den Hakenteilen (19, 19a) und einer Ausprägung (26) des Lagerelements (4) eingeklemmt gehalten wird.

## Claims

1. A retaining device for a pedal (2) of a motor vehicle, in particular for a pedal (2) of a foot-operated parking brake, which can be connected to a cross member of the vehicle body by way of a stationary bracket (3) of the retaining device, wherein the pedal-receiving means of the retaining device is constructed in two parts and comprises a bearing element (4) which is arranged in the bracket (3) and in which the pedal (2) is mounted so as to be pivotable, **characterized in that** the bearing element (4) is held by means of an adjustment device (10), which comprises a displacement pin (21) guided in a guide slot (20) in the bearing element (4), and is held in a fixed manner in a normal position **(I)** by way of a fastening device (11), which comprises at least one hook part (19, 19a) - engaging over a web part (15) of the bracket (3) - on a rear web part (4a) of the bearing element, and in a crash position (**II**) is arranged so as to be displaceable contrary to the direction of travel (**F**) relative to the stationary bracket (3), in such a way that in the normal position the web part (4a) engages in a locking manner over an opposite web part (15) of the bracket (3) and that the hook part (19, 19a) can be unlocked in the crash position (**II**).

2. A retaining device according to Claim 1, **characterized in that** at the front-face end - as viewed in the direction of travel (**F**) - the bearing element (4) is connected to a stop plate (24) which is opposite an end wall (23) of the vehicle body and at a distance therefrom.

3. A retaining device according to one or more of the preceding Claims, **characterized in that** the adjustment device (10) comprises a spacing sleeve (22) arranged on the displacement pin (21) between arms (16, 17) of the bearing element (4).

4. A retaining device according to one or more of the preceding Claims, **characterized in that** the bracket (3) has recesses (8a) in the side portions (13, 14), in which recesses (8a) a cockpit cross member (8) of the vehicle is arranged and fastened.

5. A retaining device according to one or more of the preceding Claims, **characterized in that** in the crash position **(II)** the bearing element (4) is arranged so as to be displaceable in the bracket (3) in a manner dependent upon the length of the guide slot (20) in the bearing element (4).

6. A retaining device according to one or more of the preceding Claims, **characterized in that** the adjustment device (10) is arranged in a lower region - with respect to the direction of travel (**F**) - of the bracket (3) and of the bearing element (4), and the displacement pin (21) is situated at a distance (**a**) from the pivot axis (5) of the pedal (2) and is arranged substantially in a horizontal plane with the said pivot axis (5), and in the normal position (**I**) the open guide slot (20) extends forwards - with respect to the direction of travel (**F**) - from the pin (21).

7. A retaining device according to one or more of the preceding Claims, **characterized in that** in the normal position **(I)** the bracket (3) is held clamped between the hook parts (19, 19a) and a pressed-out portion (26) of the bearing element (4) on at least one front web region - with respect to the direction of travel (**F**) - remote from the pin (21).

## Revendications

1. Dispositif de support d'une pédale (2) d'un véhicule automobile, en particulier d'une pédale (2) d'un frein de stationnement à pied, lequel peut être relié par une console (3) fixe du dispositif de support à une traverse de la carrosserie du véhicule, un logement du dispositif de support destiné à la pédale étant réalisé en deux parties et comprenant un élément d'appui (4) dans lequel la pédale (2) est montée de manière à pouvoir pivoter, **caractérisé en ce que** l'élément d'appui (4) est maintenu, au moyen d'un dispositif de réglage (10) qui comprend un axe coulissant (21) guidé dans une fente de guidage (20) de l'élément d'appui (4), et est fixé dans une position de base (I) par un dispositif de fixation (11) qui est constitué d'au moins un crochet (19, 19a) passant sur une entretoise (15) de la console (3) et réalisé sur une cloison (4a) arrière de l'élément d'appui, et est disposé, dans une position de collision (II), déplaçable dans le sens contraire au sens de marche (F), par rapport à la console (3) fixe, de manière qu'en position de base, la cloison (4a) passe en la verrouillant sur une entretoise (15) opposée de la console (3), et le crochet (19, 19a) peut être déverrouillé en position de collision (II).

2. Dispositif de support selon la revendication 1, **caractérisé en ce que** l'élément d'appui (4) est relié à l'extrémité frontale avant - vu dans le sens de marche (F) - à une plaque de butée (24) qui fait face à distance à une paroi frontale (23) de la carrosserie du véhicule.

3. Dispositif de support selon une ou plusieurs des revendications précédentes, **caractérisé en ce que** le dispositif de réglage (10) comporte une douille d'écartement (22) disposée sur l'axe coulissant (21), entre des côtés (16, 17) de l'élément d'appui (4).

4. Dispositif de support selon une ou plusieurs des revendications précédentes, **caractérisé en ce que** la console (3) présente dans les joues (13, 14) des évidements (8a) dans lesquels est disposée et fixée une traverse (8) de l'habitacle du véhicule.

5. Dispositif de support selon une ou plusieurs des revendications précédentes, **caractérisé en ce que** l'élément d'appui (4) est disposé de manière à pouvoir coulisser en position de collision (II) sur l'axe (21), dans la console (3), en fonction de la longueur de la fente de guidage (20) de l'élément d'appui (4).

6. Dispositif de support selon une ou plusieurs des revendications précédentes, **caractérisé en ce que** le dispositif de réglage (10) est disposé dans une zone inférieure - par rapport au sens de marche (F) - de la console (3) et de l'élément d'appui (4) et l'axe coulissant (21) se situe à une distance (a) de l'axe de pivotement (5) de la pédale (2) et est disposé à peu près dans un plan horizontal avec cet axe de pivotement (5), et la fente de guidage (20) ouverte s'étend, en position de base (I), depuis l'axe (21) vers l'avant, par rapport au sens de marche (F).

7. Dispositif de support selon une ou plusieurs des revendications précédentes, **caractérisé en ce que** la console (3) est maintenue, en position de base (I), coincée sur au moins une zone d'entretoise avant - par rapport au sens de marche (F) - tournée à l'opposé de l'axe (21), entre les crochets (19, 19a) et une empreinte (26) de l'élément d'appui (4).
